# EUROPEAN PATENT SPECIFICATION

(11) **EP 3 985 324 B1**
(45) Date of publication and mention of the grant of the patent: **28.01.2026**
(21) Application number: 20382906.4
(22) Date of filing: 16.10.2020
(51) Int. Cl.: F24H 3/00, F24H 9/02, H05B 3/42, F24C 7/06, H05B 3/06, A01K 1/00

(54) **FAR INFRARED HEATER**
FERNINFRAROTHEIZGERÄT
APPAREIL DE CHAUFFAGE À INFRAROUGE LOINTAIN

(43) Date of publication of application: 20.04.2022
(73) Proprietor: Smart Comfort, S.L., 31110 Noáin - Navarra (ES)
(72) Inventor: Loperena Samper, Aida, 31110 Noáin - Navarra (ES); Carricaburu Bravo, Jon, 31110 Noáin - Navarra (ES); Cunchillos Arrastia, Julen, 31110 Noáin - Navarra (ES); Sevilla Moróder, Joaquín, 31110 Noáin - Navarra (ES)
(74) Representative: Elion IP, S.L.

(56) References cited:
- WO-A1-2013/044916
- WO-A2-2012/105787
- DE-U1- 202010 003 439
- DE-U1- 202015 008 167

## Description

### TECHNICAL FIELD

The present invention generally refers to infrared heaters designed to be installed in different environments, including industry environments and in environments with animals such as, stables, farms or similar. More particularly, the invention refers to a far infrared heater comprising sealing means for preventing humidity, dust and dirt to enter within the far infrared heater. The present invention is to be used in many industrial sectors, and more preferably, in the animal breeding sector.

### STATE OF THE ART

Nowadays, many industrial environments are heated using heating arrangements that normally comprise heaters, such as electric or gas heaters, that heat the air around them and fans that move the heated air within the space of the building or facilities in which the heating arrangements are installed. These solutions are highly inefficient in terms of energy consumption and costs since the heat arrangements are designed to heat the air instead of the bodies within the building. Besides, although using fans to move air within the building envelope contributes to thermal destratification of the air, some air stratification is still present within the heated space due to the natural tendency of hot air to rise up to the ceiling or roof space within the building because it is lighter than the surrounding cooler air while cool air falls to the floor as it is heavier than the surrounding warmer air.

Infrared heaters are being more frequently used to heat small and domestic spaces because they present higher efficiency rates than other heating solutions. Said infrared heaters transfer energy to bodies with lower temperature through electromagnetic radiation. Thus, these heaters heat bodies instead of heating air around the heaters. Depending on the temperature of the heating elements, e.g., the heating filaments or tubes, of the heater the wavelength of the infrared radiation peak they emit generally ranges from 780 nm to 1 mm.

Infrared heaters are normally classified by the wavelength band or the infrared emission they emit. Specifically, they can be classified as Near InfraRed (NIR) or short-wave heaters when they operate at temperatures above 1800 °C and emit in a range between 780 nm and 1.4 µm. These short-wave heaters emit some visible light. The infrared heaters can be also classified as medium-wave or Carbon InfraRed (CIR) heaters when they operate at temperatures of around 1000 °C and they emit in a range between 1.4 µm and 3 µm or Far InfraRed (FIR) heaters when they operate at temperatures of around 50-400 °C and emit in a range above 3 µm. These far infrared heaters do not emit visible light and are safer for people and animal's health than short-wave and medium-wave heaters.

These infrared heaters are also unsuitable to be installed in some environments where the humidity content is high or where the heaters may be exposed to high amounts of dust or dirt that could get inside thereof damaging the heating elements, the electrical connections or any electrical or electronic component they may integrate. Besides, due to the presence of dirt or dust in suspension or that may be projected towards the heaters, said heaters may require periodical cleaning. Since they are normally coupled to the ceiling or upper areas of the walls (above the head height of the users) of the facility or building for safety reasons since some of their components can reach temperatures above 1000°C, its cleaning becomes complex and time consuming requiring the use of ladders or cranes. These heaters may be also cleaned with pressurized water sprayers and disinfected with disinfectant gas sprayers in order to facilitate and expedite the cleaning and disinfection operation but the water and gases projected may get inside the heaters and damage their internal components and eventually they may provoke short-circuits that may also damage the electric installation of the facility in which they are installed.

Document DE202015008167 U1 describes a housing for heat emitters having two profiles and a heating emitter housed therebetween and a radiant heater having said housing. Document DE202010003439 U1 discloses a thermal radiator with two profiles connected to one another, at least one heating element arranged between the two profiles and an insulating element thermally decoupling the two profiles that is arranged between the at least one heating element and one of the profiles.

Therefore, there is still a need in the art for far infrared heaters which are able to prevent liquids, dust and dirt to enter into them to avoid damages in the heating elements and in any electric or electronic element the heater may house. These far infrared heaters will be especially useful for environments where there is a high degree of humidity, where the heaters are in direct contact with fluids (including gases and liquids), where the heaters are exposed to dirt, pollution or dust and where the heaters may be exposed to chemical substances that may attack some of their internal or external components. Examples of such environments may be animal breeding farms, water intensive industries, such as paper industry, warehouses, sports centres, industrial production facilities in general, etc.

### DESCRIPTION OF THE INVENTION

A first object of the invention is a far infrared heater that comprises a backing cover and a radiant front cover, said backing cover and radiant front cover being coupled to each other defining a chamber therebetween. The backing cover and the radiant front cover are longitudinal covers that define two opposite long edges and two opposite short edges. The far infrared heater further comprises at least one heating element thermally coupled to an inner surface of the radiant front cover to heat the radiant front cover so as to radiate far infrared radiation from a radiant heat emitting outer surface thereof. The far infrared radiation emitted by the radiant front cover will heat the bodies within the area covered by the emitted radiation. The radiation emitted may depend on the temperature reached by the heating elements and thus, on the temperature reached by the radiant front cover, the material the radiant front cover is made of and the emissivity cover, e.g., a high emissivity paint, with which the radiant heat emitting outer surface may be covered. As used herein, a far infrared heater refers to a heating apparatus able to transfer energy to bodies with lower temperature through electromagnetic radiation with a wavelength that ranges between 3-1000 µm approximately. As used herein, a heating element refers to any device able to generate heat such as resistances, resistances inserted into metallic tubes, hoses through which hot water flows, Carbon Fiber Heating wires, etc.

The radiant front cover of the far infrared heater comprises a first outer rib located in correspondence with and along each one of the two opposite long edges of the radiant front cover and a corresponding first inner rib located in correspondence with said two opposite long edges and at a first distance inwards from each first outer rib. In turn, the backing cover comprises a second outer rib located in correspondence with and along each one of its two opposite long edges and a corresponding second inner rib located in correspondence with the long edges and at a second distance inwards from each second outer rib. The first and second outer ribs and the first and second inner ribs define respective side sub-chambers and a main sub-chamber within the chamber of the far infrared heater and the heating elements are coupled to the inner surface of the radiant front cover in correspondence with the main sub-chamber.

The far infrared heater also comprises longitudinal sealing elements to avoid humidity, dust and dirt to enter within the main chamber. The first inner ribs of the radiant front cover are positioned relative to the second inner ribs of the backing cover so as to catch or trap the sealing element between them such that the main sub-chamber is sealed from the side sub-chambers. For example, the sealing element may be a longitudinal rubber seal or gasket whose dimensions are such that fill the gap between the first and second inner ribs avoiding humidity, dirt or dust to enter within the main chamber. Since the heating elements and the electric and/or electronic components of the far infrared heater are placed within the main sub-chamber, no humidity, dirt or dust will damage any of these components. The length of the sealing elements, the two opposite long edges of the backing cover and of the radiant front cover and of the first and second inner and outer ribs will be substantially the same.

The far infrared heater further comprises first side covers coupled to the two opposite short edges of the radiant front cover and respective second side covers coupled to the two opposite short edges of the backing cover. These second side covers are located on the first side covers. Thus, the first side covers may be firstly coupled, e.g., screwed, to both short edges of the radiant front cover, and then, the second side covers may be positioned on the respective first side covers and coupled, e.g., screwed, to both short edges of the backing cover. Since during operation, the radiant front cover may reach temperatures higher than 300°C while the backing cover may reach temperatures of about 100°C, the thermal expansion suffered by both covers is different. Thus, instead of having one single side cover that could break or deform due to the two different pressures transmitted by the backing cover and the radiant front cover, respectively (each of them being subjected to a different thermal expansion), having one side cover coupled to the backing cover (which is only subjected to the forces exerted by the thermal expansion of the backing cover) and another coupled to the radiant front cover (which is only subjected to the forces exerted by the thermal expansion of the radiant front cover), any breakage or deformation of said side covers is avoided. In some other embodiments, the first side cover may be coupled to the backing cover and the second side cover may be coupled to the radiant front cover.

In some embodiments, the sealing element is a U-shaped sealing element, e.g., a U-shaped gasket, and is configured to be coupled to the first inner rib and to abut against the second inner rib. In other words, the longitudinal U-shaped sealing element comprises a base and two side arms that define an inner space in which at least part of the first inner rib of the radiant front cover is inserted. The distance between the first inner rib and the second inner rib and the dimensions of the U-shaped sealing element, more particularly, the thickness of its base and side arms, will be adjusted such that the U-shaped sealing element abuts against the second inner rib sealing the main sub-chamber from the side sub-chamber.

In some embodiments, the U-shaped sealing element comprises a protruding portion, for example a hollow semicircular protrusion, coupled to one of its side arms, the protruding portion being oriented towards and abutting against the second outer rib. The distance between the first inner rib and the second outer rib and the dimensions of the protruding portion of the sealing element, more particularly the thickness of protruding portion, will be adjusted such that said protruding portion abuts against the second outer rib contributing to seal the main sub-chamber from the side sub-chamber. This particular design of the sealing element improves its sealing capacity since it creates a first sealing barrier between the second outer rib and the first inner rib and a second sealing barrier between the first and second inner ribs.

In some embodiments, the second inner ribs comprise a coupling section coupled to the backing cover at one of its ends and a L-shaped section coupled to an opposite end of the coupling section. The base and one of the arms of the U-shaped sealing element are configured to abut against the inner surfaces of the L-shaped section of the second inner ribs. This particular structure of the second inner ribs provides two contact surfaces with the sealing element which contributes to the improvement of the sealing of the far infrared heater.

In some embodiments, the backing cover and the radiant front cover are arch-shaped. This arch-shaped form of both covers avoids liquids and other substances to be retained on their outer surfaces since the inclination of both covers will outwardly drive these substances. Besides, the arch-shaped form of the radiant front cover increases the opening angle of the far infrared radiation emitted by the heater.

In some embodiments, the width of the radiant front cover is slightly less than the width of the backing cover such that the radiant front cover is at least partially inserted within the backing cover when the radiant front cover and the backing cover are coupled to each other. The long edges of the radiant front cover and the backing cover will not contact each other in order to avoid creation of thermal bridges. More preferably, the second outer ribs will overlap the first outer ribs when the backing cover and the radiant front cover are coupled to each other. Since the far infrared heaters are normally coupled to ceilings or walls by any coupling mechanism attached to the backing cover, any fluid or dirt that may fall on the backing cover will slide over its inclined surface until it falls from the second ribs to the ground. Therefore, the overlapping of the second outer ribs over the first outer ribs contributes to avoid humidity, dust and dirt to enter into the side sub-chambers.

In some embodiments, the far infrared heater comprises a sliding C-shaped longitudinal body. The backing cover and the radiant front cover further comprise respective hook-shaped coupling elements attached to their inner surfaces and located in correspondence to each other. The sliding C-shaped longitudinal body is configured to slide along the hook-shaped coupling elements to couple the backing cover to the radiant front cover. The hook-shaped coupling elements are positioned between the inner ribs and the heating elements creating another sealing barrier between the side-sub-chambers and the heating elements. In fact, the hook-shaped coupling elements and the C-shaped longitudinal bodies define respective intermediate sub-chambers between the side sub-chambers and the main sub-chamber. The shape and dimensions of the hook-shaped coupling elements and the C-shaped longitudinal body are such that they ensure a strong and reliable mechanical connection between the backing cover and the radiant front cover and they prevent humidity, dirt or dust to pass from the intermediate sub-chamber to the main sub-chamber.

In some embodiments, the sliding C-shaped longitudinal body is made of steel and a central portion of the C-shaped longitudinal body has a plurality of through holes along its longitudinal axis. The fact that the sliding C-shaped longitudinal body is made of steel, that is bad thermal conductor, and the existence of through holes in the central portion (said central portion being the portion of the C-shaped body between its side arms) contributes to reduce the thermal conductivity of the C-shaped longitudinal body so heat transfer between the radiant front cover and the backing cover is minimized.

In some embodiments, the far infrared heating elements are U-shaped electric heating tubes, preferably two U-shaped electric heating tubes, coupled to the inner surface of the radiant front cover. More particularly, the inner surface of the radiant front cover may comprise raceways for receiving the two U-shaped electric heating tubes so the heating tubes are mechanically and thermically couped to the radiant front cover. These U-shaped electric heating tubes may be hollow metallic tubes housing one or more electrical resistances. By using U-shaped electric heating tubes, the electrical connections of said tubes are all located in only one of the sides of the heater so the electrical wires that feed the tubes can be introduced into the heater through one single opening. This facilitates the sealing of the heater.

In some embodiments, the electric connection between the at least one heating element and the electric circuit that electrically feeds the heating element, is covered with a cover made of vulcanized rubber. This vulcanized rubber is an extra protection against humidity, dust or dirt in case any of these substances may enter within the main sub-chamber of the heater.

In some embodiments each first side cover is coupled to the respective short edge of the radiant front cover by interposition of a first thermally insulating piece, e.g., a rubber sheet. Moreover, each second side cover is coupled to the respective short edge of the backing cover by interposition of a second thermally insulating piece, e.g., another rubber sheet. The second side cover and the second thermally insulating piece will be located over the first side cover. Theses thermally insulating pieces also prevent humidity, dust and dirt to enter within the chamber of the far infrared heater. Preferably, the first thermally insulating piece is configured to thermally insulating the first side cover from the radiant front cover and the second thermally insulating piece is configured to thermally insulating the second side cover from the backing cover and to absorb thermal expansion of the radiant front cover.

In some embodiments, the radiant heat emitting outer surface of the radiant front cover comprises longitudinal heat dissipation fins for increasing the effective heat dissipation surface. This radiant heat emitting outer surface may be covered with a cover of a high emissivity material, for example, high emissivity paint, to increase the emissivity of the far infrared heater.

In some embodiments, the far infrared heater comprises a cable gland coupled to the backing cover. This cable gland is used to guide the electrical cables that electrically feed the heating elements out of the far infrared heater. The cable gland will ensure that no humidity, dirt or dust enters into the chamber through the opening made in the backing cover for the electrical connection of the heater.

In some examples, the backing cover, the radiant front cover and the side covers are made of aluminum or anodized aluminum. Aluminum presents a high resistance against chemical attacks from substances such as methane, ammonia or other chemical substances present in, e.g., animal farms.

In some examples, at least part of the main sub-chamber of the far infrared heaters is filled with a thermal insulating layer made of a ceramic material that is fireproof and hydrophobic. This kind of ceramic material presents better performance than other known materials such as rockwool or fiberglass.

The far infrared heater herein described presents several advantages and/or differences compared with previous heaters. In particular, this heater is liquid-tight, dust-tight and dirt-tight and presents a degree of protection IP65 or higher. The far infrared heater also presents an extended operational lifetime, requires minimum maintenance and is easy to clean (it can be cleaned with pressurized water sprayers). Moreover, the mounting operation of the different pieces that form the far infrared heater is faster and simpler than other known solutions. It also presents high resistance against chemical attacks from substances, including highly corrosive gases such as methane or ammonia among others, that may be present in the environment in which the heater is installed, and its shape, with rounded edges, facilitates its handling.

### BRIEF DESCRIPTION OF THE DRAWINGS

To complete the description and in order to provide for a better understanding of the invention, a set of drawings is provided. Said drawings form an integral part of the description and illustrate different embodiments of the invention, which should not be interpreted as restricting the scope of the invention, but just as examples of how the invention can be carried out.

The drawings comprise the following figures:
Figure 1 shows a perspective rear view of a far infrared heater, according to a particular embodiment of the invention.
Figure 2 shows a perspective front view of the far infrared heater of Figure 1.
Figure 3 shows a plant view of the inner surface of the radiant front cover of the far infrared heater of Figure 1.
Figure 4 shows a cross sectional view of the radiant front cover of Figure 3 along axis A-A.
Figure 5 shows a plant view of the inner surface of the backing cover of the far infrared heater of Figure 1.
Figure 6 shows a cross sectional view of the of the backing cover of Figure 5 along axis B-B.
Figure 7 shows a cross sectional view of the of the far infrared heater of Figure 1 along axis C-C.
Figure 8 shows an exploded view of the far infrared heater of Figure 1.
Figure 9 shows a detailed view of one of the side covers of the far infrared heater of Figure 1.
Figure 10 shows a partial view of the far infrared heater of Figure 1 with the backing cover moved relative to the radiant front cover.
Figure 11 shows a perspective view of the U-shaped electric heating tubes of the far infrared heater of Figure 1 with the electrical cables that electrically feed them.

### DETAILED DESCRIPTION OF THE INVENTION

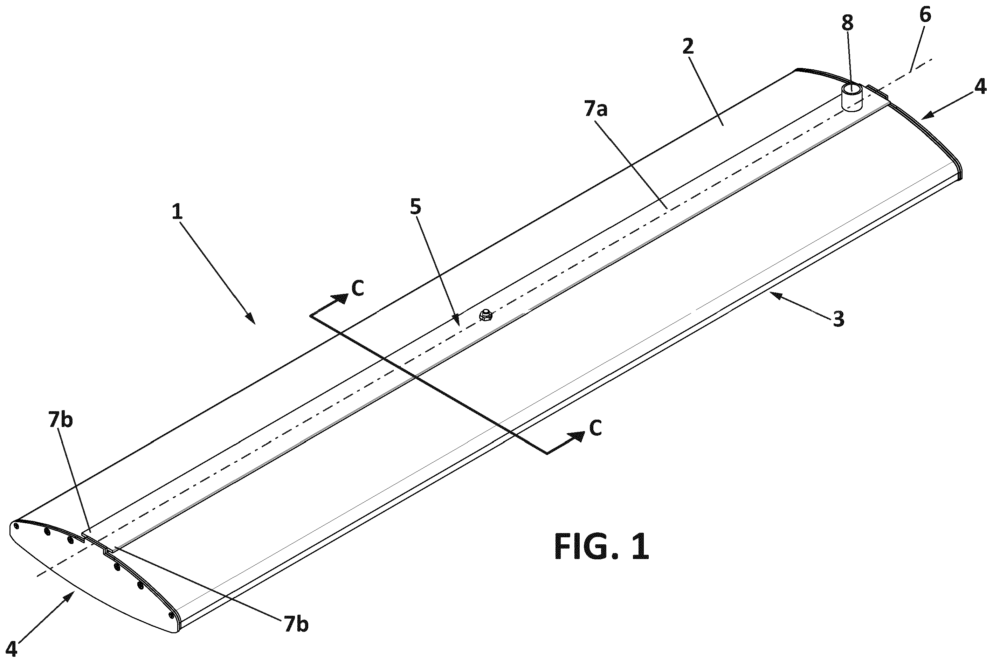

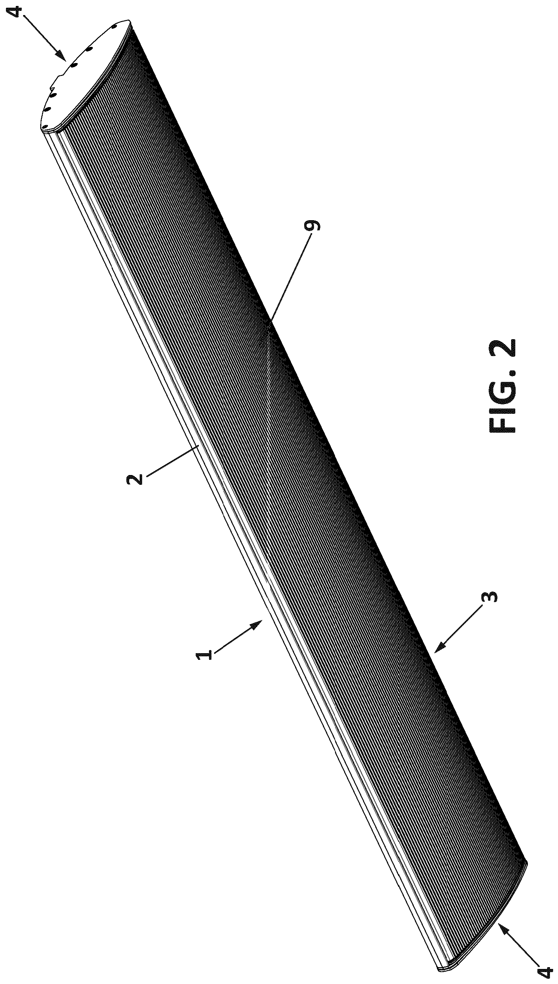

Figures 1 and 2 show different perspective views of a far infrared heater 1, according to a particular embodiment of the present invention. It should be understood that the far infrared heater 1 of Figures 1 and 2 may include additional components and that some of the components described herein may be removed and/or modified without departing from a scope of the described far infrared heater 1. Additionally, implementation of the far infrared heater 1 is not limited to such embodiment.

The far infrared heater 1 comprises a backing cover 2 and a radiant front cover 3, said backing cover 2 and radiant front cover 3 being coupled to each other defining a chamber (not shown in these figures) therebetween. The backing cover 2 and the radiant front cover 3 are longitudinal covers that define two opposite long edges and two opposite short edges. The far infrared heater 1 further comprises side covers 4 attached to its short edges. The backing cover 2 has a central supporting rib 5 located in correspondence with its longitudinal axis 6 to couple the far infrared heater 1 to a surface (not shown), preferably, to the ceiling or a wall of a building. The central supporting rib 5 is T-shaped and defines a central body 7a and two side fins 7b to which respective attaching means (not shown) may be coupled. The attaching means may be formed by C-shaped connection elements, which may slide or clip on the central supporting element 5, and brackets that may be screwed to the C-shaped connection elements. These brackets may be directly attached to the ceiling or wall or may be attached by interposition of any other attaching component. These attaching means may incorporate means to orientate the far infrared heater 1, once it has been installed, towards the objects that are intended to be heated.

The backing cover 2 further comprises a cable gland 8 inserted into an opening (not shown in this figure) in the central supporting rib 5 through which the electrical cables (not shown), that electrically feed the heating elements (not shown in this figure) within the far infrared heater 1, pass. Alternatively, the cable gland 8 may be located in any other portion of the backing cover 2. The cable gland 8 is provided with insulating means to ensure that no humidity, dust or dirt will enter inside the chamber through the same. In addition, the radiant heat emitting outer surface 9 of the radiant front cover 3 comprises longitudinal heat dissipation fins extending parallel to the longitudinal axis of the radiant front cover 3. These fins are to increase the effective heat dissipation surface of the radiant heat emitting outer surface 9.

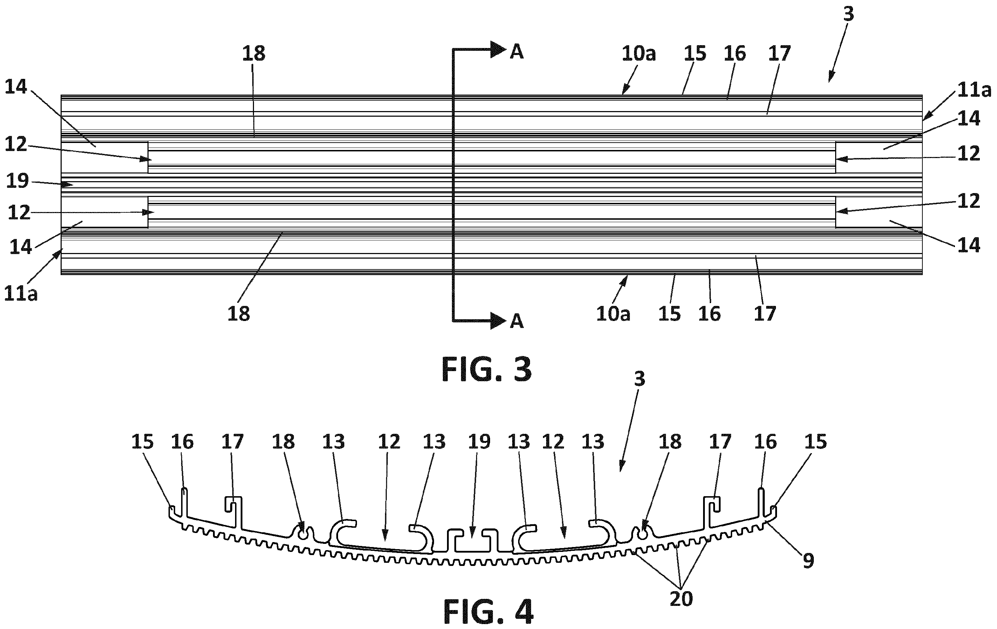

Figure 3 shows a plant view of the inner surface of the radiant front cover 3 of the far infrared heater 1 of Figure 1. Figure 4 shows a cross sectional view of the radiant front cover 3 of Figure 3 along axis A-A. The radiant front cover 3 is arch-shaped and has two opposite long edges 10a and two opposite short edges 11a. This inner surface comprises raceways 12 for receiving linear heating elements (not shown in this figure), preferably for receiving two U-shaped electric heating tubes. These raceways 12 have curved lateral flanges 13 that are crimped to at least partially surround the U-shaped electric heating tubes therebetween. This guarantees the securement of the U-shaped electric heating tubes within the raceways 12. The raceways 12 do not totally cover the distance between the two opposite short edges 11a of the radiant front cover 3 but they leave free spaces 14 at both of their ends. These free spaces 14 are to facilitate the insertion, by sliding, of the U-shaped electric heating tubes and to house the electrical connections between the U-shaped electric heating tubes and the electrical cables that electrically feeds them.

The radiant front cover 3 further comprises first outer ribs 15 located in correspondence with and along each one of its two opposite long edges 10a and corresponding first inner ribs 16 located in correspondence with said two opposite long edges 10a and at a distance inwards from each respective first outer rib 15. The radiant front cover 3 comprises first hook-shaped coupling elements 17 in which a sliding C-shaped longitudinal body (not shown in this figure) is inserted to couple the backing cover 2 to the radiant front cover 3. These first hook-shaped coupling elements 23 are located at a distance from the first inner ribs 16 such that the raceways 12 remain in the space delimited by the two first hook-shaped coupling elements 17. In addition, the radiant front cover 3 comprises raceways 18 in which the screws that fix the side covers 4 to the radiant front cover 3 are inserted and a raceway 19 in which an end of a fixation bolt (not shown in this figure) is introduced. The opposite end of this fixation bolt may pass through a passing hole located in the central supporting rib 5 of the backing cover 2 and may be secured on the outer surface of the backing cover by means of a nut. The fixation bolt, that is an optional feature, contributes the secure the coupling of the radiant front cover 3 to the backing cover 2. Figure 4 also shows the longitudinal heat dissipation fins 20 on the radiant heat emitting outer surface 9 that increase the effective heat dissipation surface. This radiant heat emitting outer surface 9 will be covered with a high emissivity cover, e.g., a high emissivity paint, to increase the emissivity of the radiant front cover 3.

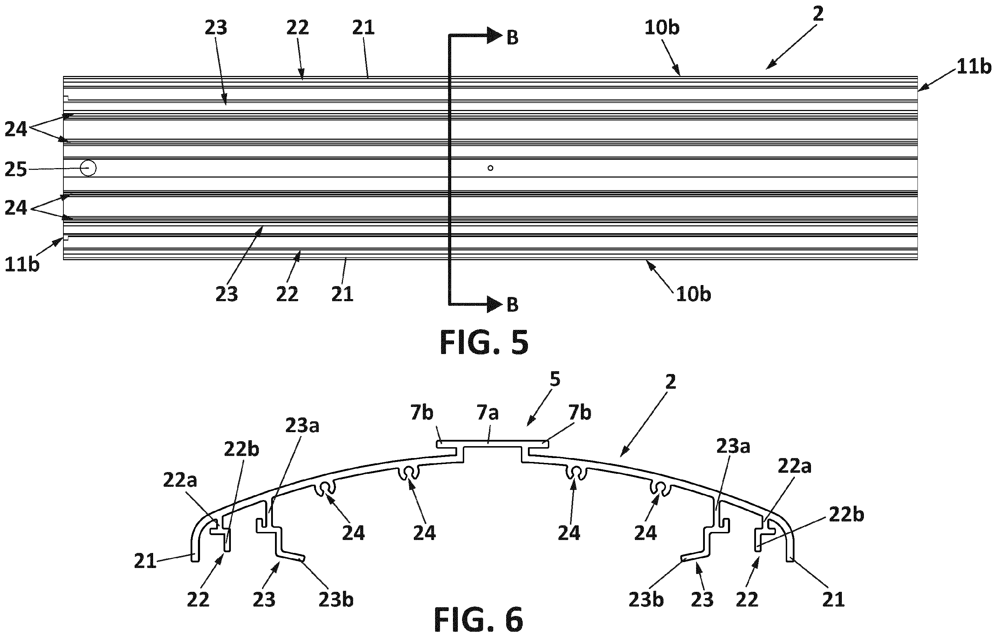

Figure 5 shows a plant view of the inner surface of the backing cover 2 of the far infrared heater 1 of Figure 1. Figure 6 shows a cross sectional view of the backing cover 2 of Figure 5 along axis B-B. The backing cover 2 is also arch-shaped and has two opposite long edges 10b and two opposite short edges 11b. The backing cover 2 comprises second outer ribs 21 located in correspondence with and along each one of its two opposite long edges 10b and a corresponding second inner rib 22 located in correspondence with the long edges 10b and at a distance inwards from each second outer rib 21. In such embodiment, the second inner ribs 22 comprise a coupling section 22a, that is coupled to the backing cover 2 at one of its ends, and a L-shaped section 22b coupled to the opposite end of the coupling section 22a.

The backing cover 2 further comprises second hook-shaped coupling elements 23 in which the sliding C-shaped longitudinal body (not shown in this figure) is inserted to couple the backing cover 2 to the radiant front cover 3. These second hook-shaped coupling elements 23 are located at a distance from the second inner ribs 22 and comprise a hook-shaped portion 23a that is configured to be coupled to the sliding C-shaped longitudinal body and a retaining portion 23b that extends outwardly from the hook-shaped portion 28a and that is for retaining a thermally insulating material that is placed in the space delimited between these retaining portions 23b. In addition, the backing cover 2 comprises several raceways 24 in which the screws that fix the side covers 4 to the backing cover 2 are inserted. Figure 5 also shows the opening 25 into the central supporting rib 5 in which the cable gland 8 is inserted.

All the raceways 12,18,19,24 that extend along the longitudinal axis 6 of the far infrared heater 1 also contributes to provide structural rigidity to the radiant front cover 3 and to the backing cover 2.

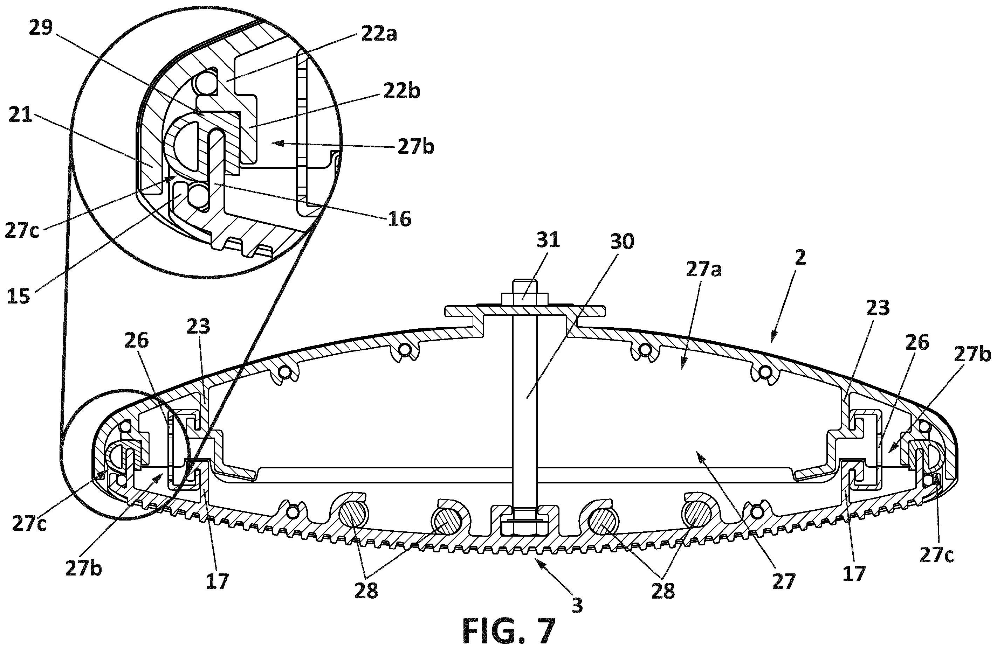

Figure 7 shows a cross sectional view of the of the far infrared heater 1 of Figure 1 along axis C-C. The backing cover 2 and the radiant front cover 3 shown in figure 7 substantially correspond to the covers shown in figures 3 to 6. In this figure, the sliding C-shaped longitudinal body 26 is mechanically attached to the first hook-shaped coupling elements 17 and to the second hook-shaped coupling elements 23 to couple the backing cover 2 to the radiant front cover 3. The hook shaped coupling elements 17,23 extend parallel and along the entire length to the long edges 10a,10b of the covers 2,3.

The backing cover 2 and the radiant front cover 3 define a chamber 27. More specifically, the chamber 27 is divided in a main sub-chamber 27a delimited by the hook-shaped coupling elements 17,23, intermediate sub-chambers 27b delimited by the hook-shaped coupling elements 17,23 and the respective inner ribs 16,22 and side sub-chambers 27c delimited by the inner ribs 16,22 and the respective outer ribs 15,21. The U-shaped electric heating tubes 28 are inserted in their respective raceways 12. The space between the two second hook-shaped coupling elements 23 may be filled with a ceramic material that is fireproof and hydrophobic to thermally insulating the backing cover from the U-shaped electric heating tubes 28.

The far infrared heater 1 also comprises respective sealing elements 29 located between the first inner ribs 16 and the second inner ribs 22. The two sealing elements 30 are coupled to the first inner ribs 16. In particular, each sealing element 29 has a U-shaped section formed by a base and two side arms that define an inner space in which part of the first inner rib 16 is inserted and a hollow semicircular protrusion coupled to the side arm that is located between the first outer rib 15 and the first inner rib 16. While the base and the side arm free of the hollow semicircular protrusion abut against the L-shaped section 22b of the second inner rib 22, the hollow semicircular protrusion abuts against the second outer rib 21. The length of the sealing elements 29 substantially corresponds with the length of the first inner ribs 16 on which they are mounted.

Thus, the sealing elements 29 and the first and second inner ribs 16,22 form respective sealing barriers to avoid humidity, dust or dirt to pass from the side sub-chambers 27c to the intermediate sub-chambers 27b. The sliding C-shaped longitudinal body 26 and the first and second hook-shaped coupling elements 17,23 form another sealing barrier to avoid humidity, dust or dirt to pass from the intermediate sub-chambers 27b to the main sub-chamber 27a. Figure 7 also shows the fixation bolt 30 attached to the radiant front cover 3 by means of the raceway 19, in which a T shaped end of said fixation bolt 30 is inserted, and to the backing cover 2 by means of a nut 31.

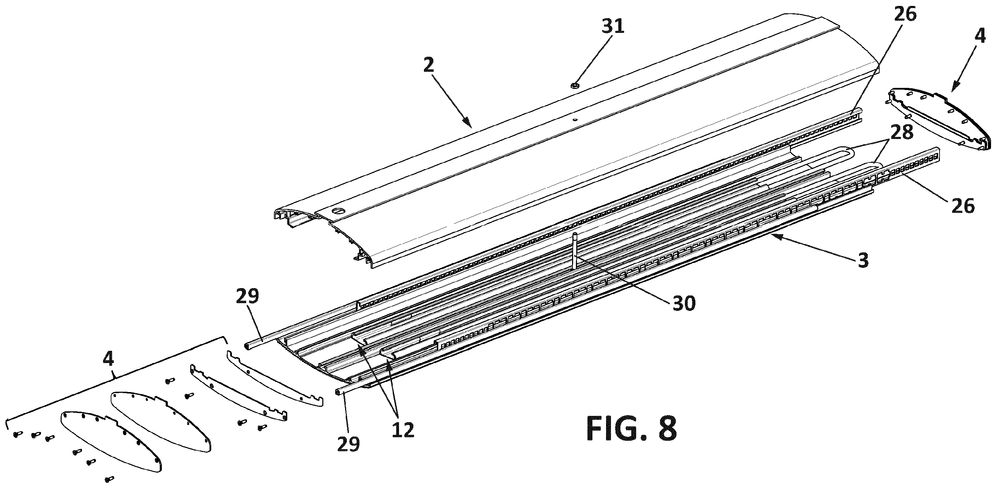

Figure 8 shows an exploded view of the far infrared heater 1 of Figure 1. This figure clearly shows how the different elements forming the heater 1 are mounted. The U-shaped electric heating tubes 28 slide within their respective raceways 12. The sliding C-shaped longitudinal bodies 26 are mounted in the first hook-shaped coupling elements 17 and the longitudinal sealing elements 29 are coupled to the respective first inner ribs 16.

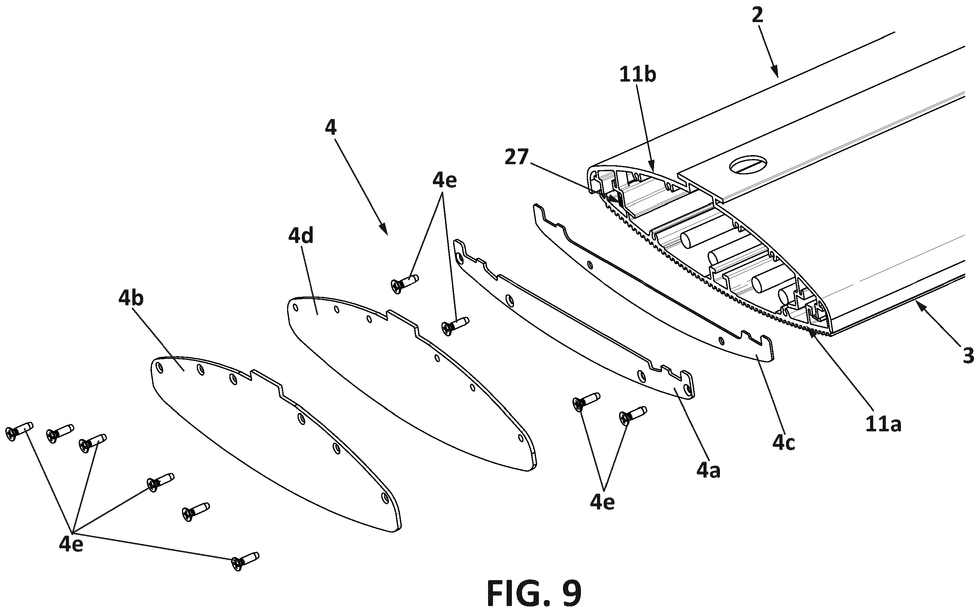

Figure 9 shows a detailed view of one of the side covers 4 of the far infrared heater 1 of Figure 1. Each side cover 4 is formed by a first cover 4a that is coupled to the short edge 11a of the radiant front cover 3 by interposition of a first insulating sheet 4c and a second cover 4b that is coupled to the short edge 11b of the backing cover 2 by interposition of a second insulating sheet 4d. In such embodiment, the first cover 4a and the first insulating sheet 4c are coupled, by means of four screws 4e, to the short edge11a of the radiant front cover 3, in particular to the raceways 18. Then, the second cover 4c and the second insulating sheet 4d are coupled, by means of six screws 4e, to the short edge of the backing cover 2, in particular to the raceways 24. The first insulating sheet 4c may be made of a compact silicone rubber and have a thickness of 1-3 mm. Since the first insulating sheet 4c is in thermal contact with the radiant front cover 3 that may reach temperatures above 300 °C, said first insulating sheet 4c is configured to thermally insulating the first cover 4a from the radiant front cover 3. The second insulating sheet 4d may be made of a silicone rubber sponge with a thickness of 5 to 10 mm. The second insulating sheet 4d is configured to thermally insulating the second cover 4b from the backing cover 2 and also to absorb the lateral displacement of the radiant front cover 3 with the first cover due to thermal expansion of the radiant front cover 3. Since during operation, the radiant front cover may reach temperatures higher than 300°C while the backing cover may reach temperatures of about 100°C, the thermal expansion suffered by the radiant front cover 3 is greater than the thermal expansion suffered by the backing cover 2. The thickness of the second insulating sheet 4d may be selected based on the thermal expansion of the radiant front cover 3.

Therefore, having a first cover 4a coupled to the radiant front cover 3 and a second cover 4b coupled to the backing cover 2, the forces exerted by the different thermal expansions to which both covers 2,3 are subjected in operation are not transmitted to the same piece avoiding any breakage or deformation of the side covers 4. The thermally insulating sheets 4c,4d also prevent humidity, dust and dirt to enter within the chamber 27 of the far infrared heater 1.

While figures 8 and 9 shows side covers 4 with a particular shape and geometry, the side covers 4 may have other shapes and geometries provided that they comply with the functioning previously disclosed.

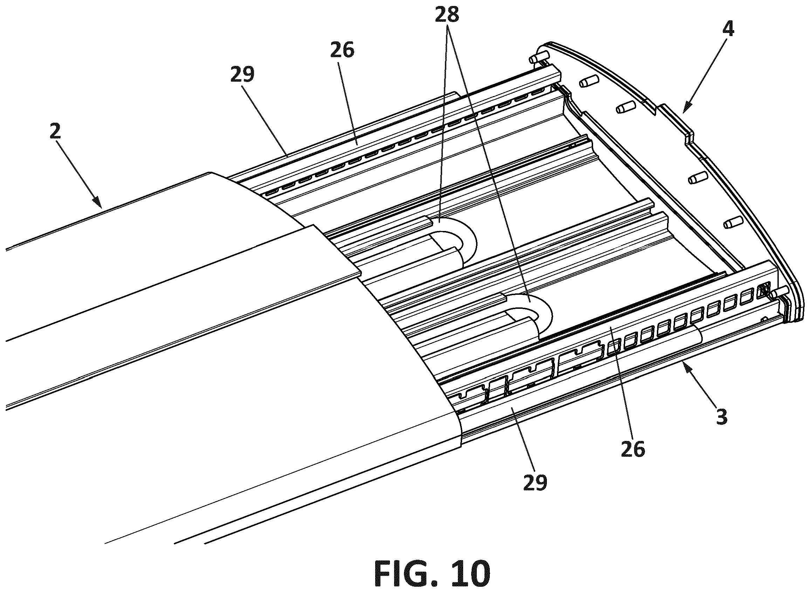

Figure 10 shows a partial view of the far infrared heater of Figure 1 with the backing cover 2 moved relative to the radiant front cover 3.

The U-shaped electric heating tubes 28 are inserted within the raceways 12, the sliding C-shaped longitudinal bodies 26 are mounted in the first hook-shaped coupling elements 17 and the longitudinal sealing elements 29 are coupled to the respective first inner ribs 16.It also shows the inner surface of the side cover 4 as it is when all the elements 4a-4e that form it are coupled to each other and to the short edge 11a of the radiant front cover 3.

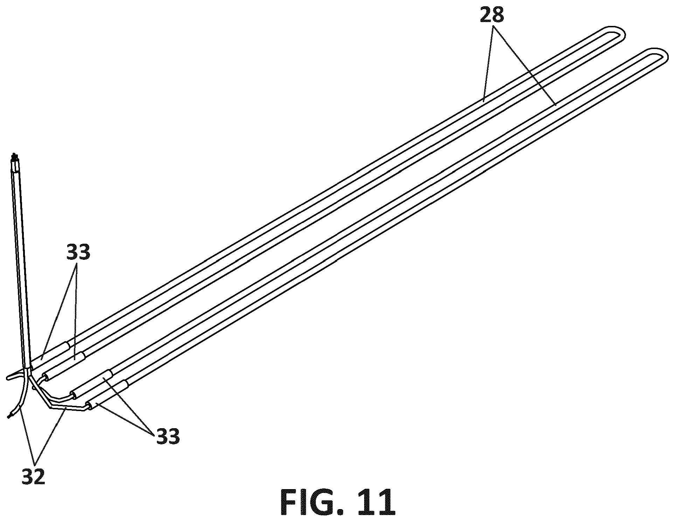

Figure 11 shows a perspective view of the U-shaped electric heating tubes 28 of the far infrared heater 1 of Figure 1 with the electrical cables 32 that electrically feed them. The electrical cables 32 are connected to the resistances inside the U-shaped tubes 28 to feed them. The cable that points outwardly in an opposite direction to the tubes 28 is an earthing cable, that may be contacting any of the covers 2,3,4 of the heater 1, to take the static charges from the heater 1 to avoid risk of shocks for users. The electrical connections between the resistances inside the U-shaped tubes 28 and the electric cables 32 are covered with a cover 33 made of vulcanized rubber. This vulcanized rubber is an extra protection against humidity, dust or dirt in case any of these substances may enter within the main sub-chamber 27a of the heater 1. The cables leave the chamber 27 of the heater 1 through the cable gland 8 that is coupled to the opening 25 in the backing cover 2. This cable gland 8 guides the electrical cables 32 out of the far infrared heater 1 at the same time that ensures that no humidity, dirt or dust enters into the chamber 25 through said opening 25.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A far infrared heater (1) comprising:
a backing cover (2) and a radiant front cover (3), wherein the backing cover (2) and the radiant front cover (3) are coupled to each other defining a chamber (27) therebetween, the covers (2,3) being longitudinal covers with two opposite long edges and two opposite short edges,
at least one heating element (28) thermally coupled to an inner surface of the radiant front cover (3) to heat the radiant front cover (3) so as to radiate far infrared radiation from a radiant heat emitting outer surface (9) thereof,
wherein the radiant front cover (3) comprises a first outer rib (15) in correspondence with and along each one of its two opposite long edges (10a) and a corresponding first inner rib (16) located in correspondence with the long edges (10a) and at a first distance inwards from each first outer rib (15), and the backing cover (2) comprises a second outer rib (21) in correspondence with and along each one of its two opposite long edges (10b) and a corresponding second inner rib (22) located in correspondence with the long edges (10b) and at a second distance inwards from each second outer rib (21), the outer ribs (15,21) and the inner ribs (16,22) defining respective side sub-chambers (27c) and a main sub-chamber (27a) within the chamber (27), and
wherein the heater (1) further comprises longitudinal sealing elements (29), and the first inner ribs (16) are positioned relative to the second inner ribs (22) so as to catch the sealing elements (29) between them such that the main sub-chamber (27a) is sealed from the side sub-chambers (27c)
**characterized in that** the far infrared heater (1) comprises respective first side covers (4a) coupled to the two opposite short edges (11a) of the radiant front cover (3) and respective second side covers (4b) coupled to the two opposite short edges (11b) of the backing cover (2) and located on the first side covers (4a).

2. The far infrared heater (1) according to claim 1, wherein the sealing element (29) is a U-shaped sealing element and is configured to be coupled to the first inner rib (16) and to abut against the second inner rib (22).

3. The far infrared heater (1) according to claim 2, wherein the U-shaped sealing element (29) comprises a protruding portion coupled to one of its arms, the protruding portion being oriented towards and abutting against the second outer rib (21).

4. **The** far infrared heater (1) according to claims 2 or 3, wherein the second inner ribs (22) comprise:
a coupling section (22a) coupled to the backing cover (2) at one of its ends; and
a L-shaped section (22b) coupled to an opposite end of the coupling section (22a);
wherein a base and an arm of the U-shaped sealing element (29) abut against inner surfaces of the L-shaped section (22b).

5. **The** far infrared heater (1) according to any one of the preceding claims, wherein the backing cover (2) and the radiant front cover (3) are arch-shaped.

6. **The** far infrared heater (1) according to any one of the preceding claims, wherein a width of the radiant front cover (3) is slightly less than a width of the backing cover (2) such that the radiant front cover (3) is at least partially inserted within the backing cover (2) when the radiant front cover (3) and the backing cover (2) are coupled to each other.

7. The far infrared heater (1) according to any one of the preceding claims, comprising a sliding C-shaped longitudinal body (26), wherein the backing cover (2) and the radiant front cover (3) comprise respective hook-shaped coupling elements (17,23) located in correspondence to each other, such that the sliding C-shaped longitudinal body (26) is configured to slide along the hook-shaped coupling elements (17,23) to couple the backing cover (2) to the radiant front cover (3).

8. The far infrared heater (1) according to claim 7, wherein the sliding C-shaped longitudinal body (26) is made of steel and a central portion of the C-shaped longitudinal body (26) has through holes along its longitudinal axis.

9. The far infrared heater (1) according to any one of the preceding claims, wherein the heating elements (28) are U-shaped electric heating tubes coupled to the inner surface of the radiant front cover (3).

10. The far infrared heater (1) according to claim 9, wherein the inner surface of the radiant front cover (2) comprises raceways (12) for receiving the U-shaped electric heating tubes (28).

11. The far infrared heater (1) according to any one of the preceding claims, comprising an electrical connection between the at least one heating element (28) and an electrical circuit, the electrical connection being covered with a cover made of vulcanized rubber.

12. The far infrared heater (1) according to claim 1, wherein each first side cover (4a) is coupled to the respective short edge (11a) of the radiant front cover (3) by interposition of a first thermally insulating piece (4c) and each second side cover (4b) is coupled to the respective short edge (11b) of the backing cover (2) by interposition of a second thermally insulating piece (4d), the second side cover (4b) and the second thermally insulating piece (4d) being located over the first side cover (4a).

13. The far infrared heater (1) according to claim 12, wherein the first thermally insulating piece (4c) is configured to thermally insulating the first side cover (4a) from the radiant front cover (3) and the second thermally insulating piece (4d) is configured to thermally insulating the second side cover (4d) from the backing cover (2) and to absorb thermal expansion of the radiant front cover (3).

14. The far infrared heater (1) according to any one of the preceding claims, comprising a cable gland (8) coupled to the backing cover (2).

## Patentansprüche

1. Ferninfrarotheizgerät (1), umfassend:
eine Rückabdeckung (2) und eine strahlende Frontabdeckung (3), wobei die Rückabdeckung (2) und die strahlende Frontabdeckung (3) miteinander verbunden sind und eine Kammer (27) zwischen sich bilden, wobei die Abdeckungen (2, 3) Längsabdeckungen mit zwei gegenüberliegenden langen Kanten und zwei gegenüberliegenden kurzen Kanten sind,
mindestens ein Heizelement (28), das thermisch mit einer Innenfläche der strahlenden Frontabdeckung (3) gekoppelt ist, um die strahlende Frontabdeckung (3) zu erwärmen, um Ferninfrarotstrahlung davon von einer strahlende Wärme emittierenden Außenfläche (9) auszustrahlen, wobei die strahlende Frontabdeckung (3) eine erste äußere Rippe (15) korrespondierend mit und entlang jeder ihrer beiden gegenüberliegenden langen Kanten (10a) und eine korrespondierende erste innere Rippe (16) aufweist, die korrespondierend mit den langen Kanten (10a) und in einem ersten Abstand nach innen von jeder ersten äußeren Rippe (15) angeordnet ist, und die Rückabdeckung (2) eine zweite äußere Rippe (21) aufweist, die mit jeder ihrer beiden gegenüberliegenden langen Kanten (10b) korrespondiert und entlang dieser verläuft, sowie eine korrespondierende zweite innere Rippe (22), die mit den langen Kanten (10b) korrespondiert und in einem zweiten Abstand nach innen von jeder zweiten äußeren Rippe (21) angeordnet ist, wobei die äußeren Rippen (15, 21) und die inneren Rippen (16, 22) jeweilige Seitenunterkammern (27c) und eine Hauptunterkammer (27a) innerhalb der Kammer (27) bilden, und
wobei das Heizgerät (1) ferner Längsdichtungselemente (29) umfasst und die ersten inneren Rippen (16) relativ zu den zweiten inneren Rippen (22) so positioniert sind, dass sie die Dichtungselemente (29) zwischen sich einfangen, so dass die Hauptunterkammer (27a) gegenüber den Seitenunterkammern (27c) abgedichtet sind
**dadurch gekennzeichnet, dass** das Ferninfrarotheizgerät (1) jeweilige erste Seitenabdeckungen (4a), die mit den beiden gegenüberliegenden kurzen Kanten (11a) der strahlenden Frontabdeckung (3) verbunden sind, und jeweilige zweite Seitenabdeckungen (4b) umfasst, die mit den beiden gegenüberliegenden kurzen Kanten (11b) der Rückabdeckung (2) verbunden sind und auf den ersten Seitenabdeckungen (4a) angeordnet sind.

2. Ferninfrarotheizgerät (1) nach Anspruch 1, wobei das Dichtungselement (29) ein U-förmiges Dichtungselement ist und so konfiguriert ist, dass es mit der ersten inneren Rippe (16) verbunden ist und an der zweiten inneren Rippe (22) anliegt.

3. Ferninfrarotheizgerät (1) nach Anspruch 2, wobei das U-förmige Dichtungselement (29) einen vorstehenden Abschnitt aufweist, der mit einem seiner Arme verbunden ist, wobei der vorstehende Abschnitt zur zweiten äußeren Rippe (21) hin ausgerichtet ist und an dieser anliegt.

4. Ferninfrarotheizgerät (1) nach Anspruch 2 oder 3, wobei die zweiten inneren Rippen (22) umfassen:
einen Kupplungsabschnitt (22a), der an einem seiner Enden mit der Rückabdeckung (2) verbunden ist; und
einen L-förmigen Abschnitt (22b), der mit einem gegenüberliegenden Ende des Kupplungsabschnitts (22a) verbunden ist;
wobei eine Basis und ein Arm des U-förmigen Dichtungselements (29) an Innenflächen des L-förmigen Abschnitts (22b) anliegen.

5. Ferninfrarotheizgerät (1) nach einem der vorstehenden Ansprüche, wobei die Rückabdeckung (2) und die Strahlungsfrontabdeckung (3) bogenförmig sind.

6. Ferninfrarotheizgerät (1) nach einem der vorstehenden Ansprüche, wobei die Breite der strahlenden Frontabdeckung (3) geringfügig kleiner ist als die Breite der Rückabdeckung (2), so dass die strahlende Frontabdeckung (3) zumindest teilweise in die Rückabdeckung (2) eingeführt ist, wenn die strahlende Frontabdeckung (3) und die Rückabdeckung (2) miteinander verbunden sind.

7. Ferninfrarotheizgerät (1) nach einem der vorstehenden Ansprüche, umfassend einen verschiebbaren C-förmigen Längskörper (26), wobei die Rückabdeckung (2) und die strahlende Frontabdeckung (3) jeweils hakenförmige Kupplungselemente (17, 23) aufweisen, die einander korrespondierend angeordnet sind, so dass der verschiebbare C-förmige Längskörper (26) so konfiguriert ist, dass er entlang der hakenförmigen Kupplungselemente (17, 23) gleitet, um die Rückabdeckung (2) mit der strahlenden Frontabdeckung (3) zu koppeln.

8. Ferninfrarotheizgerät (1) nach Anspruch 7, wobei der verschiebbare C-förmige Längskörper (26) aus Stahl besteht und ein mittlerer Abschnitt des C-förmigen Längskörpers (26) entlang seiner Längsachse Durchgangslöcher aufweist.

9. Ferninfrarotheizgerät (1) nach einem der vorstehenden Ansprüche, wobei die Heizelemente (28) U-förmige elektrische Heizrohre sind, die mit der Innenfläche der strahlenden Frontabdeckung (3) verbunden sind.

10. Ferninfrarotheizgerät (1) nach Anspruch 9, wobei die Innenfläche der strahlenden Frontabdeckung (2) Laufbahnen (12) zur Aufnahme der U-förmigen elektrischen Heizrohre (28) aufweist.

11. Ferninfrarotheizgerät (1) nach einem der vorstehenden Ansprüche, umfassend eine elektrische Verbindung zwischen dem mindestens einen Heizelement (28) und einem Stromkreis, wobei die elektrische Verbindung mit einer Abdeckung aus vulkanisiertem Gummi abgedeckt ist.

12. Ferninfrarotheizgerät (1) nach Anspruch 1, wobei jede erste Seitenabdeckung (4a) mit der jeweiligen kurzen Kante (11a) der strahlenden Frontabdeckung (3) durch Zwischenanordnung eines ersten thermisch isolierenden Teils (4c) verbunden ist und jede zweite Seitenabdeckung (4b) mit der jeweiligen kurzen Kante (11b) der Rückabdeckung (2) durch Einfügen eines zweiten thermisch isolierenden Teils (4d) verbunden ist, wobei die zweite Seitenabdeckung (4b) und das zweite thermisch isolierende Teil (4d) über der ersten Seitenabdeckung (4a) angeordnet sind.

13. Ferninfrarotheizgerät (1) nach Anspruch 12, wobei das erste thermisch isolierende Teil (4c) so konfiguriert ist, dass es die erste Seitenabdeckung (4a) gegenüber der strahlenden Frontabdeckung (3) thermisch isoliert, und das zweite thermisch isolierende Teil (4d) so konfiguriert ist, dass es die zweite Seitenabdeckung (4d) gegenüber der Rückabdeckung (2) thermisch isoliert und die Wärmeausdehnung der strahlenden Frontabdeckung (3) absorbiert.

14. Ferninfrarotheizgerät (1) nach einem der vorstehenden Ansprüche, umfassend eine Kabelverschraubung (8), die mit der Rückabdeckung (2) verbunden ist.

## Revendications

1. Appareil de chauffage (1) à infrarouge lointain comprenant :
un couvercle (2) arrière et un couvercle (3) avant rayonnant, dans lequel le couvercle (2) arrière et le couvercle (3) avant rayonnant sont reliés l'un à l'autre, définissant une chambre (27) entre eux, les couvercles (2, 3) étant des couvercles longitudinaux avec deux bords longs opposés et deux bords courts opposés,
au moins un élément chauffant (28) couplé thermiquement à une surface interne du couvercle (3) avant rayonnant de façon à chauffer le couvercle (3) avant rayonnant pour qu'il émette un rayonnement infrarouge lointain à partir d'une surface externe émettrice de chaleur rayonnante (9) de celui-ci,
dans lequel le couvercle (3) avant rayonnant comprend une première nervure externe (15) située en correspondance avec ses deux bords longs (10a) opposés et le long de chacun d'eux et une première nervure interne (16) correspondante située en correspondance avec les bords longs (10a) et à une première distance vers l'intérieur de chaque première nervure externe (15), et le couvercle (2) arrière comprend une deuxième nervure externe (21) située en correspondance avec ses deux bords longs (10b) opposés et le long de chacun d'eux et une deuxième nervure interne (22) correspondante située en correspondance avec les bords longs (10b) et à une deuxième distance vers l'intérieur de chaque deuxième nervure externe (21), les nervures externes (15, 21) et les nervures internes (16, 22) définissant de sous-chambres latérales (27c) respectives et une sous-chambre principale (27a) à l'intérieur de la chambre (27), et
dans lequel l'appareil de chauffage (1) comprend en outre des éléments d'étanchéité (29) longitudinaux, et les premières nervures internes (16) sont positionnées par rapport aux deuxièmes nervures internes (22) de façon à retenir les éléments d'étanchéité (29) entre elles de sorte que la sous-chambre principale (27a) soit étanche par rapport aux sous-chambres latérales (27c)
**caractérisé en ce que** l'appareil de chauffage (1) à infrarouge lointain comprend de premiers couvercles latéraux (4a) respectifs couplés aux deux bords courts (11a) opposés du couvercle (3) avant rayonnant et de deuxièmes couvercles latéraux (4b) respectifs couplés aux deux bords courts (11b) opposés du couvercle (2) arrière et situés sur les premiers couvercles latéraux (4a).

2. Appareil de chauffage (1) à infrarouge lointain selon la revendication 1, dans lequel l'élément d'étanchéité (29) est un élément d'étanchéité en forme de U et est configuré pour être couplé à la première nervure interne (16) et pour venir en butée contre la deuxième nervure interne (22).

3. Appareil de chauffage (1) à infrarouge lointain selon la revendication 2, dans lequel l'élément d'étanchéité (29) en forme de U comprend une partie saillante couplée à l'un de ses bras, la partie saillante étant orientée vers la deuxième nervure externe (21) et venant en butée contre celle-ci.

4. Appareil de chauffage (1) à infrarouge lointain selon les revendications 2 ou 3, dans lequel les deuxièmes nervures internes (22) comprennent :
une section de couplage (22a) couplée au couvercle (2) arrière à l'une de ses extrémités ; et
une section en forme de L (22b) couplée à une extrémité opposée de la section de couplage (22a) ;
dans lequel une base et un bras de l'élément d'étanchéité (29) en forme de U viennent en butée contre des surfaces internes de la section en forme de L (22b).

5. Appareil de chauffage (1) à infrarouge lointain selon l'une quelconque des revendications précédentes, dans lequel le couvercle (2) arrière et le couvercle (3) avant rayonnant ont une forme d'arc.

6. Appareil de chauffage (1) à infrarouge lointain selon l'une quelconque des revendications précédentes, dans lequel une largeur du couvercle (3) avant rayonnant est légèrement inférieure à une largeur du couvercle (2) arrière de sorte que le couvercle (3) avant rayonnant soit au moins partiellement inséré dans le couvercle (2) arrière lorsque le couvercle (3) avant rayonnant et le couvercle (2) arrière sont couplés l'un à l'autre.

7. Appareil de chauffage (1) à infrarouge lointain selon l'une quelconque des revendications précédentes, comprenant un corps longitudinal coulissant en forme de C (26), dans lequel le couvercle (2) arrière et le couvercle (3) avant rayonnant comprennent des éléments de couplage en forme de crochet (17, 23) respectifs situés en correspondance l'un avec l'autre, de sorte que le corps longitudinal coulissant en forme de C (26) soit configuré pour coulisser le long des éléments de couplage en forme de crochet (17, 23) pour coupler le couvercle (2) arrière au couvercle (3) avant rayonnant.

8. Appareil de chauffage (1) à infrarouge lointain selon la revendication 7, dans lequel le corps longitudinal coulissant en forme de C (26) est en acier et une partie centrale du corps longitudinal en forme de C (26) présente des trous traversants le long de son axe longitudinal.

9. Appareil de chauffage (1) à infrarouge lointain selon l'une quelconque des revendications précédentes, dans lequel les éléments chauffants (28) sont des tubes chauffants électriques en forme de U couplés à la surface interne du couvercle (3) avant rayonnant.

10. Appareil de chauffage (1) à infrarouge lointain selon la revendication 9, dans lequel la surface interne du couvercle (2) avant rayonnant comprend des chemins de roulement (12) pour recevoir les tubes chauffants électriques en forme de U (28).

11. Appareil de chauffage (1) à infrarouge lointain selon l'une quelconque des revendications précédentes, comprenant une connexion électrique entre au moins un élément chauffant (28) et un circuit électrique, la connexion électrique étant recouverte d'un couvercle en caoutchouc vulcanisé.

12. Appareil de chauffage (1) à infrarouge lointain selon la revendication 1, dans lequel chaque premier couvercle latéral (4a) est couplé au bord court (11a) respectif du couvercle (3) avant rayonnant par interposition d'une première pièce thermiquement isolante (4c) et chaque deuxième couvercle latéral (4b) est couplé au bord court (11b) respectif du couvercle (2) arrière par interposition d'une deuxième pièce thermiquement isolante (4d), le deuxième couvercle latéral (4b) et la deuxième pièce thermiquement isolante (4d) étant situés sur le premier couvercle latéral (4a).

13. Appareil de chauffage (1) à infrarouge lointain selon la revendication 12, dans lequel la première pièce thermiquement isolante (4c) est configurée pour isoler thermiquement le premier couvercle latéral (4a) du couvercle (3) avant rayonnant et la deuxième pièce thermiquement isolante (4d) est configurée pour isoler thermiquement le deuxième couvercle latéral (4d) du couvercle (2) arrière et pour absorber la dilatation thermique du couvercle (3) avant rayonnant.

14. Appareil de chauffage (1) à infrarouge lointain selon l'une des revendications précédentes, comprenant un presse-étoupe (8) couplé au couvercle (2) arrière.
